# EUROPÄISCHE PATENTSCHRIFT

(11) **EP 4 497 960 B1**
(45) Veröffentlichungstag und Bekanntmachung des Hinweises auf die Patenterteilung: **22.04.2026**
(21) Anmeldenummer: 24188742.1
(22) Anmeldetag: 16.07.2024
(51) Int. Cl.: F16D 41/30, B62J 45/411, B62J 45/421, B62M 6/50

(54) **ANTRIEBSANORDNUNG FÜR EIN FAHRRAD**
DRIVE ASSEMBLY FOR A BICYCLE
DISPOSITIF D'ENTRAÎNEMENT POUR BICYCLETTE

(30) Priorität: 27.07.2023 DE 102023207195
(43) Veröffentlichungstag der Anmeldung: 29.01.2025
(73) Patentinhaber: ZF Friedrichshafen AG, 88046 Friedrichshafen (DE)
(72) Erfinder: Holder, Kevin, 88074 Meckenbeuren (DE); Pagel, Janik, 88131 Lindau (DE); Neumann, Finn, 88212 Ravensburg (DE)
(74) Vertreter: ZF Friedrichshafen AG

(56) Entgegenhaltungen:
- CN-A- 102 644 679
- CN-A- 109 421 882
- US-A1- 2021 046 992

## Beschreibung

### Technisches Gebiet

Die vorliegende Erfindung bezieht sich auf eine Antriebsanordnung für ein Fahrrad. Zudem bezieht sich die vorliegende Erfindung auf ein Fahrrad.

### Stand der Technik

Bei Fahrrädern ist es bekannt, einen Freilauf vorzusehen. Damit kann beispielsweise eine Tretkurbelwelle von einem angetriebenen Laufrad abgekoppelt werden. So kann das Fahrrad rollen, ohne dass dabei jeweilige Pedale des Fahrrads mitdrehen. Bei Pedelecs kann mit einem Freilauf beispielsweise auch ein Antriebsmotor abgekoppelt werden. In einem Sperrzustand kann der Freilauf dagegen zwei Wellen miteinander drehfest verbinden, um beispielsweise eine Übertragung von Antriebskraft zu ermöglichen.

Durch eine Erfassung einer Verformung eines Bauteils des Freilaufs kann dabei die übertragene Antriebskraft erfasst werden, beispielsweise um einen Antrieb zu steuern. Allerdings kann es je nach Bauform des Freilaufs sowie einer relativen Position, in welcher die beiden Wellen miteinander verbunden wurde, zu Störgrößen kommen. Beispielsweise kann im Sperrzustand in dem Freilauf eine Radialkraft wirken, welche den Freilauf abhängig von einer Sperrzustandsposition verformt. Entsprechend kann die erfasste Verformung nur ungenau zu der übertragenen Antriebskraft korrespondieren.

Die CN102644679 A offenbart einen Klinkenfreilauf zur asynchronen Drehzahlreglung in einem Fahrrad. Die CN109421882 A offenbart eine Drehmomenterfassungsbaugruppe und einen in der Mitte montierten Motor und ein Fahrrad. Die US2021046992 A1 offenbart offenbart ein Fahrrad, das in der Lage ist, die Leistung zu messen, und insbesondere einen Zahnkranz des Fahrrads, der in der Lage ist, die durch den Zahnkranz übertragene Leistung zu messen.

### Darstellung der Erfindung

Ein erster Aspekt betrifft eine Antriebsanordnung für ein Fahrrad. Die Antriebsanordnung kann beispielsweise ein Getriebe, eine Tretkurbelwelle, ein Laufrad und jeweilige Kraftübertragungselemente zu dem Laufrad aufweisen. Die Antriebsanordnung kann einen Antriebsmotor aufweisen, beispielsweise ausgebildet als Elektromotor. Die Antriebsanordnung kann für ein als Pedelec ausgebildetes Fahrrad ausgebildet sein. Die Antriebsanordnung kann dazu ausgebildet sein, eine Antriebskraft von einem Fahrradfahrer und optional von dem Antriebsmotor an das Laufrad zu übertragen.

Die Antriebsanordnung weist einen Klinkenfreilauf auf. Ein Klinkenfreilauf wird auch als Sperrklinkenfreilauf bezeichnet. Ein Freilauf kann beispielsweise Drehmoment nur in eine Drehrichtung übertagen, wobei sich der Freilauf dann in seinem Sperrzustand befindet. Bei einer relativen Drehrichtungsumkehr wird eine Verbindung dagegen selbsttätig gelöst, womit sich der Freilauf dann in seinem Freigabezustand befindet. Der Klinkenfreilauf kann beispielsweise dazu ausgebildet sein, einen Antrieb, wie eine Tretkurbelwelle, von einem Abtrieb zu entkoppeln. Beispielsweise kann der Klinkenfreilauf die Tretkurbelwelle auch von dem Antriebsmotor entkoppeln oder den Antriebsmotor von der Tretkurbelwelle. Der Klinkenfreilauf kann auch dazu ausgebildet sein, einen Gang in dem Getriebe der Antriebsanordnung zu verändern.

Der Klinkenfreilauf weist wenigstens einen ersten Ring und einen zweiten Ring auf. Die beiden Ringe können permanent drehfest jeweils mit einer Welle der Antriebsanordnung verbunden sein. Der erste Ring weist eine Verzahnung auf. Die Verzahnung kann sich beispielsweise entlang eines Umfangs des ersten Rings radial innen oder außen erstrecken. Der Klinkenfreilauf weist wenigstens eine beweglich an dem zweiten Ring gelagerte Klinke auf. Die Klinke kann auch als Sperrklinke bezeichnet werden. Die Klinke befindet sich in einem Sperrzustand in Eingriff mit der Verzahnung des ersten Rings. Die Klinke kann bezüglich des Eingriffs beispielsweise federvorgespannt sein. In einem Freigabezustand ist der Eingriff der Klinke mit der Verzahnung aufgehoben. In dem Sperrzustand sind die beiden Ringe drehfest miteinander über den Eingriff verbunden. In dem Freigabezustand gleitet die Klinke beispielsweise an der Verzahnung ab und die beiden Ringe können relativ zueinander rotieren. Die Klinke kann beispielsweise ein Verdrehen der beiden Ringe zueinander in eine Drehrichtung erlauben und in eine entgegengesetzte Drehrichtung ab einem Eingriff der Klinke mit der Verzahnung unterbinden. Die Ringe können auch jeweilige nicht ringförmige Teilbereiche aufweisen. Die Klinken und die Verzahnung können an zueinander zugewandten Seiten der beiden Ringe angeordnet sein. Die beiden Ringe können koaxial zueinander angeordnet sein. Die beiden Ringe können in dem gleichen Axialbereich angeordnet sein. Die beiden Ringe können jeweils um eine Mittelachse drehbar gelagert sein.

Die Antriebsanordnung weist eine Sensorvorrichtung auf, welche dazu ausgebildet ist, eine Verformung des ersten Rings des Klinkenfreilaufs aufgrund einer anliegenden Antriebskraft zu erfassen. Die Antriebskraft kann beispielsweise an den zweiten Ring in dem Sperrzustand übertragen werden oder von dem zweiten Ring in dem Sperrzustand an den ersten Ring übertragen werden. Die Antriebskraft kann beispielsweise durch einen Fahrer des Fahrrads an jeweiligen Pedalen in die Antriebsanordnung eingeleitet werden. Die erfasste Verformung kann beispielsweise eine Aussage über ein übertragenes Drehmoment erlauben. Damit kann beispielsweise eine Leistungsmessung, eine automatische Steuerung einer Gangschaltung des Fahrrads und alternativ oder zusätzlich eine Steuerung des Antriebsmotors möglich sein. Die Steuerung kann auch direkt in Abhängigkeit der erfassten Verformung erfolgen. Die Sensorvorrichtung kann beispielsweise wenigstens einen Sensor aufweisen. Die Sensorvorrichtung kann beispielsweise dazu ausgebildet sein, die Verformung elektroresistiv, magnetisch, optisch oder auch akustisch zu bestimmen. Beispielsweise kann die Sensorvorrichtung einen oder mehrere an dem ersten Ring befestigte Dehnungsmessstreifen aufweisen. Die Sensorvorrichtung kann eine Auswertvorrichtung aufweisen, um jeweilige Sensorsignale auszuwerten. Sofern mehrere Sensoren vorgesehen sind, können deren Sensorsignale beispielsweise zu einem einzigen Messwert fusioniert werden.

Der erste Ring weist in Umfangsrichtung wenigstens einen Verzahnungsbereich und einen zahnfreien Bereich auf. Dadurch kann eine relative Lage des Eingriffs der Klinke mit der Verzahnung relativ zu einer Messstelle der Verformung an dem ersten Ring vorgegeben werden. Dadurch können Störgrößen bei der Verformungsmessung durch eine Relativposition der beiden Ringe bei dem Eingriff der Klinke mit der Verzahnung vermieden werden. Beispielsweise kann der Eingriff eine Radialkraft verursachen. Zudem kann die Messstelle beispielsweise nicht auf einer zentralen Achse des ersten Rings erfolgen, wenn dieser hohl ausgebildet ist. Sofern eine durchgehende Verzahnung vorgesehen ist, würde je nach Winkel des Eingriffs der Klinke mit der Verzahnung zu der Messstelle die Radialkraft die Verformung unterschiedlich beeinflussen. So kann beispielsweise ein Berechnen eines anliegenden Drehmoments in Abhängigkeit der erfassten Verformung sehr ungenau, da stark positionsabhängig, sein.

Die Messstelle kann beispielsweise zu einer Position eines Sensors der Sensorvorrichtung an dem ersten Ring korrespondieren. Beispielsweise kann der erste Ring nur einen einzigen Verzahnungsbereich mit nur einen einzigen Zahn aufweisen, sodass die Eingriffsstelle immer identisch zu der Messstelle ausgerichtet ist. Es können aber auch mehr Verzahnungsbereiche vorgesehen sein. Alternativ oder zusätzlich können auch mehr Zähne bei den jeweiligen Verzahnungsbereichen vorgesehen sein. Dann ist beispielsweise ein schnellerer Eingriff und damit ein Sperren des Klinkenfreilaufs bei einer entsprechenden Drehrichtung möglich. Der Verzahnungsbereich kann die Verzahnung bilden. Der erste Ring kann aber auch mehrere Verzahnungsbereiche aufweisen, welche gemeinsam die Verzahnung bilden. Sofern mehrere Klinken vorgesehen sind, welche gleichzeitig im Eingriff sein können, kann zudem eine Bauteilbelastung geringgehalten werden. Durch den zahnfreien Bereich kann dann trotzdem eine mögliche Varianz einer Ausrichtung jeweiliger Eingriffe zu jeweiligen Verformungsmessstellen gering sein, sodass ein Einfluss von Störgrößen, wie Radialkräften, gering sein kann. Eine relative Ausrichtung des Eingriffs der Klinke mit der Verzahnung zu dem Sensor kann beispielsweise in einem vorbestimmten Winkelbereich relativ zu jeweiligen Sensoren der Sensorvorrichtung liegen.

Es können mehrere Verzahnungsbereiche und alternativ oder zusätzlich mehrere zahnfreie Bereiche vorgesehen sein. Zwischen jedem Verzahnungsbereich kann ein zahnfreier Bereich angeordnet sein, beispielsweise in Umfangsrichtung. Die jeweiligen Verzahnungsbereiche können in Umfangsrichtung voneinander beabstandet sein, beispielsweise durch jeweilige zahnfreie Bereiche. Jeder Verzahnungsbereich weist wenigstens einen Zahn auf, welcher für einen Eingriff mit der Klinke ausgebildet ist. Sofern mehrere Zähne pro Verzahnungsbereich vorgesehen sind, können diese sich in Umfangsrichtung nebeneinander befinden und beispielsweise direkt aneinander anschließen. Die Verzahnungsbereiche und die zahnfreien Bereiche erstrecken sich beispielsweise in Umfangsrichtung außen oder innen an dem ersten Ring. Jeweilige Klinken und alternativ oder zusätzliche Verzahnungsbereiche können identisch ausgebildet sein. Jeweilige Klinken und alternativ oder zusätzliche Verzahnungsbereiche können gleichmäßig, insbesondere symmetrisch, angeordnet sein. Jeweilige folgende Ausführungen für nur einen Verzahnungsbereich und alternativ oder zusätzlich nur eine Klinke gelten gleichermaßen auch für mehrere Verzahnungsbereiche bzw. Klinken, sofern anwendbar.

In einer Ausführungsform der Antriebsanordnung kann es vorgesehen, dass der erste Ring wenigstens einen ersten Verzahnungsbereich und einen zweiten Verzahnungsbereich aufweist. Die beiden Verzahnungsbereiche können in Umfangsrichtung voneinander durch einen ersten zahnfreien Bereich und einen zweiten zahnfreien Bereich beabstandet sein. Jeder Verzahnungsbereich kann so ein separates Verzahnungssegment der Verzahnung bilden. Beispielsweise können zwei Klinken vorgesehen sein, welche im Sperrzustand jeweils mit einem der beiden Verzahnungsbereiche in Eingriff sind. Dadurch kann eine hohe Drehmomentübertragung bei einer kompakten Bauweise möglich sein. Die beiden Verzahnungsbereiche können gegenüberliegend an dem Umfang des ersten Rings angeordnet sein. Dadurch kann eine symmetrische Krafteinleitung erreicht werden.

In einer Ausführungsform der Antriebsanordnung kann es vorgesehen, dass die Antriebsanordnung wenigstens zwei Klinken aufweist. Die Antriebsanordnung kann aber auch drei oder mehr Klinken aufweisen. Die Klinken können beispielsweise voneinander beabstandet an einer Innenseite oder Außenseite des zweiten Rings angeordnet sein. Eine Winkelerstreckung der jeweiligen Verzahnungsbereiche kann größer oder gleich zu einem Winkelabstand zwischen den zwei Klinken sein. Sofern drei oder mehr Klinken vorgesehen sind, kann die Winkelerstreckung der jeweiligen Verzahnungsbereiche größer oder gleich zu einem größten Winkelabstand zwischen zwei Klinken sein. Die Klinken können gleichmäßig entlang des Umfangs des zweiten Rings angeordnet sein. Die Winkelerstreckung eines Verzahnungsbereichs kann ein Winkel zwischen einem ersten Ende des Verzahnungsbereichs in Umfangsrichtung und einem zweiten Ende des Verzahnungsbereichs in Umfangsrichtung ausgehend von einem Mittelpunkt oder einer Drehachse des ersten Rings sein. Ein Winkelabstand zwischen zwei Klinken kann ein Winkel zwischen einer ersten und einer dazu in Umfangsrichtung benachbarten zweiten Klinke ausgehend von einem Mittelpunkt oder einer Drehachse des zweiten Rings sein. Gemessen werden kann beispielsweise von einem Lagerpunkt oder einem Eingriffspunkt der beiden Klinken. Beispielsweise kann für den Winkelabstand zwischen zwei Klinken von der gleichen Stelle bei jeder Klinke ausgegangen werden. Beispielsweise kann sich ein Verzahnungsbereich um mindestens 25° entlang eines Umfangs des ersten Rings erstrecken, falls eine jeweilige Lagerstelle, um welche zwei benachbarten Klinken drehbar gelagert sind, ebenfalls 25° entlang eines Umfangs des zweiten Rings beabstandet sind. Dadurch kann ein Eingriff der Klinken und damit auch der Sperrzustand unabhängig von einer Position der beiden Ringe zueinander und damit für den Fahrer vorhersehbar sein. Sofern beispielsweise die Verzahnungsbereiche kürzer als ein Abstand zwischen den Klinken sind, muss der erste Ring je nach Position weiter oder kürzer rotieren, bis jeweilige Klinken eingreifen.

In einer Ausführungsform der Antriebsanordnung kann es vorgesehen, dass die Sensorvorrichtung dazu ausgebildet ist, die Verformung des ersten Rings in einem Bereich zu erfassen, in welchem ein von einem Fahrradfahrer an Pedalen des Fahrradantriebs eingebrachtes Drehmoment bereits summiert ist. Dadurch ist die erfasste Verformung besonders geeignet für Steuerungen des Antriebsstrangs und alternativ oder zusätzlich eine Leistungserfassung. Beispielsweise sind dafür jeweilige Sensoren an dem ersten Ring angeordnet, beispielsweise axial im Bereich des zweiten Rings und den daran angeordneten Klinken. Beispielsweise können an dem ersten Ring bereits alle Drehmomente von beiden Pedalen des Fahrrads summiert sein. Sofern die Tretkurbelwelle den ersten Ring ausbildet, kann das eingebrachte Drehmoment beispielsweise axial im Bereich des zweiten Rings bzw. der Klinken summiert sein. Beispielsweise kann das Drehmoment von beiden Pedalen am Abgriff von der Tretkurbelwelle erstmalig summiert sein. Alternativ oder zusätzlich ist die Sensorvorrichtung dazu ausgebildet ist, die Verformung des ersten Rings in einem Bereich zu erfassen, in welchem ein von dem Fahrradfahrer an Pedalen des Fahrradantriebs eingebrachtes Drehmoment noch nicht mit einem Antriebsmoment des Antriebsmotors überlagert ist. So kann beispielsweise der Antriebsmotor einfach in Abhängigkeit von der Antriebskraft des Fahrradfahrers gesteuert werden.

In einer Ausführungsform der Antriebsanordnung kann es vorgesehen, dass die Sensorvorrichtung dazu ausgebildet ist, die Verformung des ersten Rings in wenigstens einem Bereich zu erfassen, welcher benachbart zu wenigstens einem der Verzahnungsbereiche ist. Der Erfassungsbereich kann beispielsweise radial und alternativ oder zusätzlich in Umfangsrichtung benachbart sein. Beispielsweise kann der Erfassungsbereich im gleichen Umfangsbereich wie ein nächstgelegener Verzahnungsbereich liegen. Der Erfassungsbereich kann beispielsweise durch eine Anordnung eines Dehnungsmessstreifens oder durch eine Ausrichtung eines optischen Verformungssensors definiert sein. Durch die benachbarte Erfassung kann eine Verformung besonders stark sein und damit auch ein Messsignal.

In einer Ausführungsform der Antriebsanordnung kann es vorgesehen, dass die Sensorvorrichtung dazu ausgebildet ist, die Verformung des ersten Rings in wenigstens einem Bereich zu erfassen, welcher entgegengesetzt zu wenigstens einem der Verzahnungsbereiche ist. Beispielsweise kann der Erfassungsbereich in einem anderen Umfangsbereich wie ein nächstgelegener Verzahnungsbereich liegen. Beispielsweise kann der Erfassungsbereich in einem Umfangsbereich zwischen zwei nächstgelegenen Verzahnungsbereichen liegen. Beispielsweise kann der Erfassungsbereich benachbart zu einem zahnfreien Bereich angeordnet sein. Beispielsweise kann der Erfassungsbereich im gleichen Umfangsbereich wie ein nächstgelegener zahnfreier Bereich liegen. Dadurch kann die Messung weniger Störsignalen unterliegen, wie Radialkräften durch den Klinkeneingriff.

Es kann auch vorgesehen sein, dass die Verformung des ersten Rings in wenigstens einem ersten Bereich erfasst wird, welcher entgegengesetzt zu wenigstens einem der Verzahnungsbereiche ist, und in einem zweiten Bereich, welcher benachbart zu wenigstens einem der Verzahnungsbereiche ist. Dadurch kann ein Filtern von Störsignalen einfach möglich sein. Beispielsweise kann in jedem Erfassungsbereich ein Sensor der Sensorvorrichtung angeordnet sein.

In einer Ausführungsform der Antriebsanordnung kann es vorgesehen sein, dass die Sensorvorrichtung wenigstens einen Dehnungsmesstreifen als Sensor aufweist, welcher an dem ersten Ring angeordnet ist. Mit einem Dehnungsmesstreifen kann besonders einfach eine Verformung in einem bestimmten Bereich erfasst werden. Zudem kann der Dehnungsmesstreifen einfach in der Antriebsanordnung integriert werden. Es können auch zwei oder mehr Dehnungsmesstreifen vorgesehen sein, beispielsweise an unterschiedlichen Bereichen des ersten Rings. Beispielsweise können jeweilige Dehnungsmessstreifen an einer Stirnseite des ersten Rings befestigt sein.

In einer Ausführungsform der Antriebsanordnung kann es vorgesehen, dass die Sensorvorrichtung dazu ausgebildet ist, ein durch den Klinkenfreilauf übertragenes Antriebsmoment in Abhängigkeit von der Verformung zu bestimmen. Dafür kann die Sensorvorrichtung eine Auswertvorrichtung aufweisen, welche dazu ausgebildet ist, das Antriebsmoment in Abhängigkeit von der erfassten Verformung zu berechnen. Dabei können auch mehrere gemessene Verformungen, beispielsweise in unterschiedlichen Bereichen, berücksichtigt werden. Das übertragene Antriebsmoment kann besonders gut als Steuergröße für andere Funktionen der Antriebsanordnung oder des Fahrrads insgesamt genutzt werden.

Erfindungsgemäß ist es vorgesehen, dass die Antriebsanordnung eine größere Anzahl Klinken als Verzahnungsbereiche aufweist. Dadurch kann ein schnelles Sperren des Freilaufs bei einer Drehrichtungsänderung erreicht werden. Zudem können so die Verzahnungsbereiche klein sein und trotzdem ein schneller und positionsunabhängiger Eingriff der Klinken sichergestellt werden. Bei kleinen Verzahnungsbereichen kann eine Position des Eingriffs der Klinken mit Zähnen relativ zu den Sensoren bei jedem Sperren des Klinkenfreilaufs sehr ähnlich sein. Beispielsweise kann ein Vielfaches der Anzahl an Verzahnungsbereichen als Anzahl an Klinken vorgesehen sein.

In einer Ausführungsform der Antriebsanordnung kann es vorgesehen, dass die jeweiligen Verzahnungsbereiche eine Vielzahl von Zähnen aufweisen, welche in Umfangsrichtung nebeneinander angeordnet sind. Dadurch kann eine Anzahl Klinken gering sein und trotzdem ein schneller und positionsunabhängiger Eingriff der Klinken sichergestellt werden. Alternativ können alle oder auch nur einige Verzahnungsbereiche nur einen Zahn aufweisen.

In einer Ausführungsform der Antriebsanordnung kann es vorgesehen, dass der erste Ring in jeweiligen zahnfreien Bereich ausgespart ist. Dadurch beispielsweise kann sich der erste Ring in den zahnfreien Bereichen weniger weit radial erstrecken als in verzahnten Bereichen. Die radiale Erstreckung kann dabei beispielsweise bis zu einem Zahnboden gemessen werden. Der erste Ring kann beispielsweise in den zahnfreien Bereichen dünner sein. Dadurch kann eine Verformung verstärkt in den Verzahnungsbereichen erfolgen, wo diese dann besonders gut erfasst werden kann.

In einer Ausführungsform der Antriebsanordnung kann es vorgesehen, dass der erste Ring als Innenring ausgebildet ist und der zweite Ring als Außenring. Der zweite Ring kann radial außen zu dem ersten Ring angeordnet sein. Die Verzahnung kann dann radial außen an dem ersten Ring angeordnet sein. Dadurch kann die Fertigung besonders kostengünstig und einfach sein. Die jeweiligen Klinken können beispielsweise radial innen an dem zweiten Ring gelagert sein.

In einer Ausführungsform der Antriebsanordnung kann es vorgesehen, dass der erste Ring als Außenring ausgebildet ist und der zweite Ring als Innenring. Der erste Ring kann radial außen zu dem zweiten Ring angeordnet sein. Die Verzahnung kann dann radial innen an dem ersten Ring angeordnet sein. Die jeweiligen Klinken können beispielsweise radial außen an dem zweiten Ring gelagert sein. Dadurch kann die Montage der Klinken vereinfacht sein.

Ein zweiter Aspekt betrifft ein Fahrrad mit einer Antriebsanordnung gemäß dem ersten Aspekt und einer Tretkurbelwelle mit daran gelagerten Pedalen, welche für das Einleiten von einer Antriebskraft durch einen Fahrradfahrer in die Antriebsanordnung ausgebildet ist. Die Pedale sind beispielsweise drehbar an jeweils einer Tretkurbel gelagert, welche permanent drehfest mit der Tretkurbelwelle verbunden sind. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden.

### Kurze Beschreibung der Figuren

Fig. 1 veranschaulicht, wie unterschiedliche Eingriffspositionen bei einem Klinkenfreilauf eine Erfassung eines übertragenen Antriebsmoments verändern können.
Fig. 2 veranschaulicht eine erste Ausführungsform einer Antriebsanordnung für ein Fahrrad.
Fig. 3 veranschaulicht eine zweite Ausführungsform einer Antriebsanordnung für ein Fahrrad.
Fig. 4 veranschaulicht eine dritte Ausführungsform einer Antriebsanordnung für ein Fahrrad.

### Detaillierte Beschreibung von Ausführungsformen

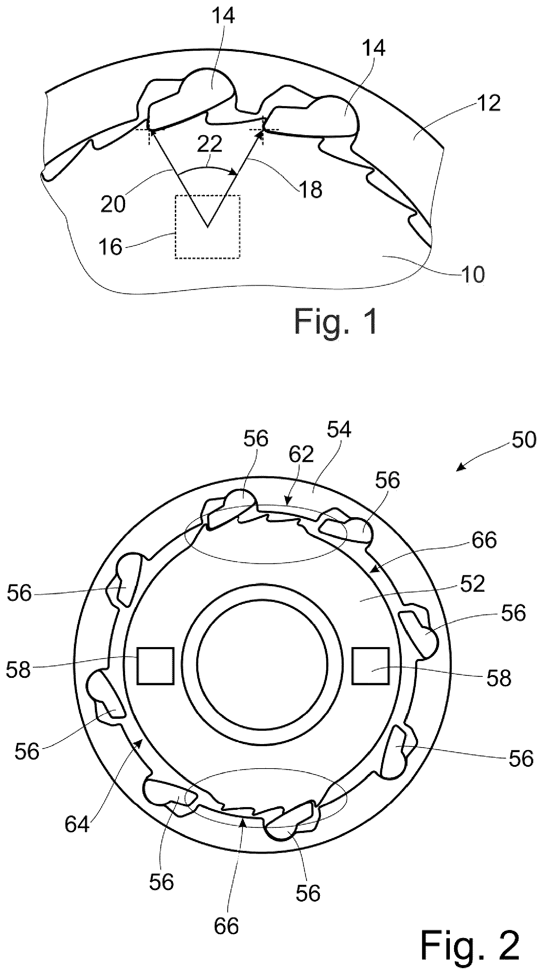

Fig. 1 zeigt ausschnittsweise einen Klinkenfreilauf mit einem Innenring 10 und einem Außenring 12. An dem Innenring 10 erstreckt sich eine radiale Außenverzahnung mit jeweiligen Zähnen entlang des gesamten Umfangs des Innenrings 10. An dem Außenring 12 sind jeweilige Klinken 14 drehbar innenseitig gelagert. In einem Sperrzustand des Klinkenfreilaufs greifen die jeweiligen Klinken 14 mit dem nächstgelegenen der Zähne des Innenrings 10 ein. Ein solcher Zustand mit zwei möglichen Relativpositionen der beiden Ringe 10, 12 zueinander ist in Fig. 1 veranschaulicht. Zudem ist ein Dehnungssensor 16 gezeigt, welcher an einer Stirnseite des Innenrings 10 exzentrisch befestigt ist und mittels welchem eine über den Klinkenfreilauf im Sperrzustand übertragenes Antriebsmoment gemessen wird.

Eine erste Relativposition der beiden Ringe 10, 12 und damit der einzigen gezeigten Klinke 14 relativ zu dem Dehnungssensor 16 entspricht der Position der Klinke 14 rechts in der Bildebene von Fig. 1. Es ergibt sich eine Ausrichtung eines Eingriffs der Klinke 14 zu dem Dehnungssensor 16, welche durch einen Pfeil 18 veranschaulicht ist. Eine zweite Relativposition der beiden Ringe 10, 12 und damit der einzigen gezeigten Klinke 14 relativ zu dem Dehnungssensor 16 entspricht der Position der Klinke 14 links in der Bildebene von Fig. 1. Es ergibt sich eine veränderte Ausrichtung eines Eingriffs der Klinke 14 zu dem Dehnungssensor 16, welche durch einen Pfeil 20 veranschaulicht ist. Ein Winkelabstand zwischen diesen zwei Pfeilen 18, 20 ist durch einen Pfeil 22 veranschaulicht und entspricht einer Erstreckung von zwei Zähnen der Verzahnung des Innenrings 10 in Umfangsrichtung.

Das übertragene Antriebsmoment korrespondiert zu einer Verformung bzw. Torsion des Innenrings 10 in Umfangsrichtung. Der Dehnungssensor 16 ist als Dehnungsmessstreifen ausgebildet, welcher nur entlang einer Achse eine Verformung erfassen kann. Gleichzeitig verursacht das übertragene Antriebsmoment aber auch eine Radialkraft an dem Eingriff. Je nach Relativposition des Eingriffs und des Dehnungssensors 16 zueinander ist ein Anteil dieser Radialkraft entlang der Messachse des Dehnungssensors 16 anders. Dadurch ergibt sich eine Störgröße bei der Messung, welche abhängig von einer Relativposition der beiden Ringe 10, 12 zueinander ist.

Dieser Effekt ist bei der ersten Ausführungsform einer Antriebsanordnung für ein Fahrrad, welche in Fig. 2 gezeigt ist, verringert. Die Antriebsanordnung weist einen Klinkenfreilauf 50 auf. Der Klinkenfreilauf 50 weist einen ersten hohlen Ring 52 mit einer Verzahnung und einen zweiten hohlen Ring 54 mit mehreren beweglich daran gelagerten Klinken 56 auf. Der Klinkenfreilauf 50 befindet sich in einem Sperrzustand, bei welchem zwei der Klinken 56 sich im Eingriff mit der Verzahnung des ersten Rings 52 befinden. Der erste Ring 52 ist als Innenring ausgebildet und die Verzahnung ist radial außen am Umfang angeordnet. Der zweite Ring 54 ist als Außenring angeordnet, wobei die Klinken 56 radial innen von dem zweiten Ring 54 zu der Verzahnung vorstehen. Die beiden Ringe 52, 54 sind koaxial angeordnet. Die Klinken 56 sind bezüglich der Verzahnung federvorgespannt.

Die Antriebsanordnung weist eine Sensorvorrichtung, welcher dazu ausgebildet ist, eine Verformung des ersten Rings 52 des Klinkenfreilaufs 50 aufgrund einer anliegenden Antriebskraft zu erfassen. So kann ein über den Klinkenfreilauf 50 im Sperrzustand übertragenes Antriebsmoment gemessen werden. Zu diesem Zweck weist die Sensorvorrichtung zwei als Dehnungsmessstreifen ausgebildete Sensoren 58 auf.

Die Verzahnung des ersten Rings 52 weist einen ersten Verzahnungsbereich 60 und einen zweiten Verzahnungsbereich 62 auf, welche in Umfangsrichtung voneinander durch einen ersten zahnfreien Bereich 64 und einen zweiten zahnfreien Bereich 66 beabstandet sind. Dadurch ist eine Varianz einer Relativposition des Eingriffs der Klinken 56 relativ zu den Sensoren 58 auf eine Erstreckung der Verzahnungsbereiche 60, 62 in Umfangsrichtung begrenzt. Dadurch kann ein möglicher Einfluss der Relativposition auf die erfasste Verformung gegenüber einem durchgehend verzahnten Innenring begrenzt werden.

Eine Winkelerstreckung der jeweiligen Verzahnungsbereiche 60, 62 ist größer oder gleich zu einem Winkelabstand zwischen zwei benachbarten der Klinken 56. Jeder der Verzahnungsbereiche 60, 62 weist dabei mehrere in Umfangsrichtung nebeneinander angeordnete Zähne auf. Dadurch ist ein Sperrverhalten des Klinkenfreilaufs 50 trotz der zahnfreien Bereiche 64, 66 positionsunabhängig. Die Klinken 56 sind gleichmäßig über den Umfang des zweiten Rings 54 verteilt angeordnet. Die Verzahnungsbereiche 60, 62 sind an entgegengesetzten Seiten des ersten Rings 52 angeordnet. Die Verzahnungsbereiche 60, 62 sind gleich ausgebildet. Die zahnfreien Bereiche 64, 66 sind gleich ausgebildet. Es ergibt sich ein symmetrischer Aufbau.

Die Sensorvorrichtung der ersten Ausführungsform ist dazu ausgebildet, die Verformung des ersten Rings 52 in zwei Bereichen zu erfassen, welcher entgegengesetzt zu den Verzahnungsbereichen 60, 62 ist. Diese Bereiche korrespondieren zu der Position der Sensoren 58. Die Sensoren 58 sind dabei im gleichen Umfangsbereich wie jeweils ein benachbarter zahnfreier Bereich 64, 66 angeordnet.

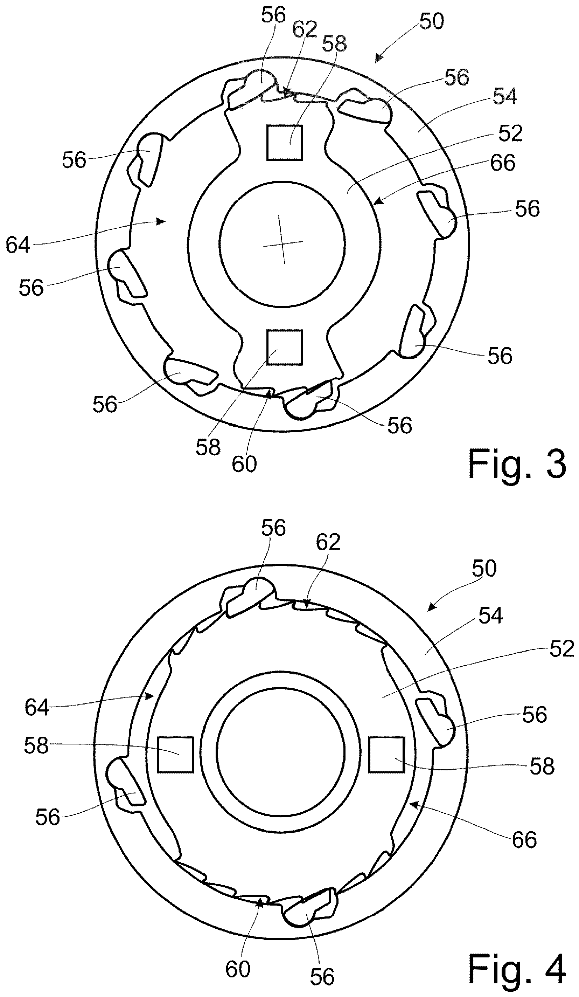

Fig. 3 zeigt eine zweite Ausführungsform der Antriebsanordnung, welche ähnlich zu der ersten Ausführungsform ist. Es werden lediglich Unterschiede erläutert.

Bei der zweiten Ausführungsform ist der erste Ring 52 im Bereich der beiden zahnfreien Bereiche 64, 66 ausgespart. Die Sensoren 58 sind nun benachbart zu den Verzahnungsbereichen 60, 62 und damit im gleichen Umfangsbereich des jeweils benachbarten Verzahnungsbereichs 60 oder 62 angeordnet. Die Sensorvorrichtung ist somit nun dazu ausgebildet, die Verformung des ersten Rings 52 in zwei Bereichen zu erfassen, welche jeweils benachbart zu wenigstens einem der Verzahnungsbereiche 60, 62 sind.

Fig. 4 zeigt eine dritte Ausführungsform der Antriebsanordnung, welche ähnlich zu der ersten Ausführungsform ist. Es werden lediglich Unterschiede erläutert.

Bei der dritten Ausführungsform ist die Zahl der Klinken 56 reduziert. Statt acht Klinken 56 sind nur noch vier Klinken 56 vorgesehen. Der Klinkenfreilauf 50 ist so kostengünstiger. Um dennoch einen positionsunabhängiges Sperrverhalten des Klinkenfreilaufs 50 zu erreichen, weisen die beiden Verzahnungsbereiche 60, 62 eine größere Erstreckung in Umfangsrichtung und damit auch mehr Zähne als in der ersten Ausführungsform auf. Die Winkelerstreckung der jeweiligen Verzahnungsbereiche 60, 62 ist weiterhin größer oder gleich zu einem Winkelabstand zwischen zwei benachbarten der Klinken 56. Der Einfluss von Störgrößen auf die Messung des übertragenen Antriebsmoments ist so bei der dritten Ausführungsform einem größeren Einfluss von Störgrößen bzw. einer Relativposition der beiden Ringe 52, 54 unterliegend als bei der ersten Ausführungsform.

### Bezugszeichen

- 10: Innenring
- 12: Außenring
- 14: Klinke
- 16: Dehnungssensor
- 18: Pfeil
- 20: Pfeil
- 22: Pfeil
- 50: Klinkenfreilauf
- 52: erster Ring
- 54: zweiter Ring
- 56: Klinken
- 58: Sensoren
- 60: Verzahnungsbereich
- 62: Verzahnungsbereich
- 64: zahnfreier Bereich
- 66: zahnfreier Bereich

## Patentansprüche

1. Antriebsanordnung für ein Fahrrad mit einem Klinkenfreilauf (50), welcher einen ersten Ring (52) mit einer Verzahnung (60, 62) und einen zweiten Ring (54) mit wenigstens einer beweglich daran gelagerten Klinke (56) aufweist, wobei sich die Klinke (56) in einem Sperrzustand in Eingriff mit der Verzahnung befindet, wobei der erste Ring (52) in Umfangsrichtung wenigstens einen Verzahnungsbereich (60, 62) und einen zahnfreien Bereich (64, 66) aufweist, **dadurch gekennzeichnet, dass** die Antriebsanordnung eine Sensorvorrichtung aufweist, wobei die Sensorvorrichtung dazu ausgebildet ist, eine Verformung des ersten Rings (52) des Klinkenfreilaufs (50) aufgrund einer anliegenden Antriebskraft zu erfassen, wobei die Antriebsanordnung eine größere Anzahl Klinken (56) als Verzahnungsbereiche (60, 62) aufweist.

2. Antriebsanordnung nach Anspruch 1, **dadurch gekennzeichnet, dass** der erste Ring (52) wenigstens einen ersten Verzahnungsbereich (60) und einen zweiten Verzahnungsbereich (62) aufweist, welche in Umfangsrichtung voneinander durch einen ersten zahnfreien Bereich (64) und einen zweiten zahnfreien Bereich (66) beabstandet sind.

3. Antriebsanordnung nach Anspruch 1 oder 2, **dadurch gekennzeichnet, dass** die Antriebsanordnung wenigstens zwei Klinken (56) aufweist, wobei eine Winkelerstreckung der jeweiligen Verzahnungsbereiche (60, 62) größer oder gleich zu einem Winkelabstand zwischen den zwei Klinken (56) ist.

4. Antriebsanordnung nach einem der vorhergehenden Ansprüche, **dadurch gekennzeichnet, dass** die Sensorvorrichtung dazu ausgebildet ist, die Verformung des ersten Rings (52) in einem Bereich zu erfassen, in welchem ein von einem Fahrradfahrer an Pedalen des Fahrradantriebs eingebrachtes Drehmoment bereits summiert ist.

5. Antriebsanordnung nach einem der vorhergehenden Ansprüche, **dadurch gekennzeichnet, dass** die Sensorvorrichtung dazu ausgebildet ist, die Verformung des ersten Rings (52) in wenigstens einem Bereich zu erfassen, welcher benachbart zu wenigstens einem der Verzahnungsbereiche (60, 62) ist.

6. Antriebsanordnung nach einem der vorhergehenden Ansprüche, **dadurch gekennzeichnet, dass** die Sensorvorrichtung dazu ausgebildet ist, die Verformung des ersten Rings (52) in wenigstens einem Bereich zu erfassen, welcher entgegengesetzt zu wenigstens einem der Verzahnungsbereiche (60, 62) ist.

7. Antriebsanordnung nach einem der vorhergehenden Ansprüche, **dadurch gekennzeichnet, dass** die Sensorvorrichtung wenigstens einen Dehnungsmesstreifen als Sensor (58) aufweist, welcher an dem ersten Ring (52) angeordnet ist.

8. Antriebsanordnung nach einem der vorhergehenden Ansprüche, **dadurch gekennzeichnet, dass** die Sensorvorrichtung dazu ausgebildet ist, ein durch den Klinkenfreilauf (50) übertragenes Antriebsmoment in Abhängigkeit von der Verformung zu bestimmen.

9. Antriebsanordnung nach einem der vorhergehenden Ansprüche, **dadurch gekennzeichnet, dass** die jeweiligen Verzahnungsbereiche (60, 62) eine Vielzahl von Zähnen aufweisen, welche in Umfangsrichtung nebeneinander angeordnet sind.

10. Antriebsanordnung nach einem der vorhergehenden Ansprüche, **dadurch gekennzeichnet, dass** der erste Ring (52) im jeweiligen zahnfreien Bereich (64, 66) ausgespart ist.

11. Antriebsanordnung nach einem der vorhergehenden Ansprüche, **dadurch gekennzeichnet, dass** der erste Ring (52) als Innenring ausgebildet ist und der zweite Ring (54) als Außenring.

12. Antriebsanordnung nach einem der vorhergehenden Ansprüche 1 bis 10, **dadurch gekennzeichnet, dass** der erste Ring als Außenring ausgebildet ist und der zweite Ring als Innenring.

13. Fahrrad mit einer Antriebsanordnung nach einem der vorhergehenden Ansprüche und einer Tretkurbelwelle mit daran gelagerten Pedalen, welche für das Einleiten von einer Antriebskraft durch einen Fahrradfahrer in die Antriebsanordnung ausgebildet ist.

## Claims

1. Drive arrangement for a bicycle, having a pawl-type freewheel (50) which has a first ring (52) with a toothing (60, 62) and has a second ring (54) with at least one pawl (56) mounted movably thereon, wherein, in a blocking state, the pawl (56) is in engagement with the toothing, wherein the first ring (52) has in a circumferential direction at least one toothing region (60, 62) and one tooth-free region (64, 66), **characterized in that** the drive arrangement has a sensor device, wherein the sensor device is configured to detect a deformation of the first ring (52) of the pawl-type freewheel (50) due to an acting drive force, wherein the drive arrangement has a larger number of pawls (56) than toothing regions (60, 62).

2. Drive arrangement according to Claim 1, **characterized in that** the first ring (52) has at least a first toothing region (60) and a second toothing region (62), which are spaced apart from one another in the circumferential direction by a first tooth-free region (64) and a second tooth-free region (66).

3. Drive arrangement according to Claim 1 or 2, **characterized in that** the drive arrangement has at least two pawls (56), wherein an angular extent of the respective toothing regions (60, 62) is greater than or equal to an angular spacing between the two pawls (56).

4. Drive arrangement according to one of the preceding claims, **characterized in that** the sensor device is configured to detect the deformation of the first ring (52) in a region in which torque introduced by a cyclist at pedals of the bicycle drive has already been summed.

5. Drive arrangement according to one of the preceding claims, **characterized in that** the sensor device is configured to detect the deformation of the first ring (52) in at least one region which is adjacent to at least one of the toothing regions (60, 62).

6. Drive arrangement according to one of the preceding claims, **characterized in that** the sensor device is configured to detect the deformation of the first ring (52) in at least one region which is opposite at least one of the toothing regions (60, 62).

7. Drive arrangement according to one of the preceding claims, **characterized in that** the sensor device has at least one strain gauge as a sensor (58), which is arranged on the first ring (52).

8. Drive arrangement according to one of the preceding claims, **characterized in that** the sensor device is configured to determine a drive torque, which is transmitted by way of the pawl-type freewheel (50), according to the deformation.

9. Drive arrangement according to one of the preceding claims, **characterized in that** the respective toothing regions (60, 62) have a multiplicity of teeth which are arranged one next to the other in the circumferential direction.

10. Drive arrangement according to one of the preceding claims, **characterized in that** the first ring (52) is cut away in the respective tooth-free region (64, 66).

11. Drive arrangement according to one of the preceding claims, **characterized in that** the first ring (52) is in the form of an inner ring and the second ring (54) is in the form of an outer ring.

12. Drive arrangement according to one of preceding Claims 1 to 10, **characterized in that** the first ring is in the form of an outer ring and the second ring is in the form of an inner ring.

13. Bicycle having a drive arrangement according to one of the preceding claims, and having a pedal crank shaft which has pedals mounted thereon and is configured for introduction of a drive force into the drive arrangement by a cyclist.

## Revendications

1. Ensemble d'entraînement pour une bicyclette avec une roue libre (50) à cliquet, qui comporte une première bague (52) avec une denture (60, 62) et une deuxième bague (54) avec au moins un cliquet (56) monté de manière mobile dessus, le cliquet (56) se trouvant dans un état verrouillé en prise avec la denture, la première bague (52) comportant dans la direction périphérique au moins une zone dentée (60, 62) et une zone non dentée (64, 66), **caractérisé en ce que** l'ensemble d'entraînement comporte un dispositif de détection, le dispositif de détection étant formé pour détecter une déformation de la première bague (52) de la roue libre (50) à cliquet due à une force d'entraînement appliquée, l'ensemble d'entraînement comportant un plus grand nombre de cliquets (56) que des zones dentées (60, 62).

2. Ensemble d'entraînement selon la revendication 1, **caractérisé en ce que** la première bague (52) comporte au moins une première zone dentée (60) et une seconde zone dentée (62), qui sont espacées l'une de l'autre dans la direction périphérique par une première zone non dentée (64) et une seconde zone non dentée (66).

3. Ensemble d'entraînement selon la revendication 1 ou 2, **caractérisé en ce que** l'ensemble d'entraînement comporte au moins deux cliquets (56), une extension angulaire des zones dentées (60, 62) respectives étant supérieure ou égale à une distance angulaire entre les deux cliquets (56).

4. Ensemble d'entraînement selon l'une des revendications précédentes, **caractérisé en ce que** le dispositif de détection est formé pour détecter la déformation de la première bague (52) dans une zone dans laquelle un couple de rotation introduit par un cycliste sur des pédales de l'entraînement de bicyclette est déjà additionné.

5. Ensemble d'entraînement selon l'une des revendications précédentes, **caractérisé en ce que** le dispositif de détection est formé pour détecter la déformation de la première bague (52) dans au moins une zone, qui est adjacente à au moins une des zones dentées (60, 62).

6. Ensemble d'entraînement selon l'une des revendications précédentes, **caractérisé en ce que** le dispositif de détection est formé pour détecter la déformation de la première bague (52) dans au moins une zone, qui est opposée à au moins une des zones dentées (60, 62).

7. Ensemble d'entraînement selon l'une des revendications précédentes, **caractérisé en ce que** le dispositif de détection comporte en tant que capteur (58) au moins une jauge de contrainte, qui est disposée sur la première bague (52).

8. Ensemble d'entraînement selon l'une des revendications précédentes, **caractérisé en ce que** le dispositif de détection est formé pour déterminer un couple d'entraînement transmis par la roue libre (50) à cliquet en fonction de la déformation.

9. Ensemble d'entraînement selon l'une des revendications précédentes, **caractérisé en ce que** les zones dentées (60, 62) respectives comportent une pluralité de dents, qui sont disposées côte à côte dans la direction périphérique.

10. Ensemble d'entraînement selon l'une des revendications précédentes, **caractérisé en ce que** la première bague (52) est évidée dans la zone non dentée (64, 66) respective.

11. Ensemble d'entraînement selon l'une des revendications précédentes, **caractérisé en ce que** la première bague (52) est formée comme une bague intérieure et la deuxième bague (54) est formée comme une bague extérieure.

12. Ensemble d'entraînement selon l'une des revendications précédentes 1 à 10, **caractérisé en ce que** la première bague est formée comme une bague extérieure et la deuxième bague est formée comme une bague intérieure.

13. Bicyclette avec un ensemble d'entraînement selon l'une des revendications précédentes et un arbre de manivelle de pédalier, sur lequel sont montées des pédales, qui est formé pour l'introduction d'une force d'entraînement par un cycliste dans l'ensemble d'entraînement.
